(19) Europäisches Patentamt
European Patent Office
Office européen des brevets

(11) **EP 4 603 357 A1**

(12) **EUROPEAN PATENT APPLICATION**
published in accordance with Art. 153(4) EPC

(43) Date of publication:
**20.08.2025  Bulletin 2025/34**

(21) Application number: **23877173.7**

(22) Date of filing: **29.09.2023**

(51) International Patent Classification (IPC):
***B60W 40/02*** (2006.01)      ***B60W 40/10*** (2012.01)
***G01M 17/007*** (2006.01)

(52) Cooperative Patent Classification (CPC):
**B60W 40/02; B60W 40/10; G01M 17/007**

(86) International application number:
**PCT/JP2023/035741**

(87) International publication number:
**WO 2024/080168 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.10.2022  JP 2022164371
02.11.2022  JP 2022176624
02.11.2022  JP 2022176625**

(71) Applicant: **SoftBank Group Corp.
Tokyo 105-7537 (JP)**

(72) Inventor: **SON, Masayoshi
Tokyo 105-7537 (JP)**

(74) Representative: **DREISS Patentanwälte PartG
mbB
Friedrichstraße 6
70174 Stuttgart (DE)**

(54) **AUTOMATED DRIVING TEST METHOD AND PROGRAM**

(57)      An autonomous driving test method includes setting a plurality of obstacles on a test course, acquiring information regarding the obstacles, and performing a traveling test related to autonomous driving of an autonomous driving vehicle by using a plurality of pieces of the acquired information and AI.

FIG.1

**Description**

Technical Field

The present disclosure relates to an autonomous driving test method and a program.

Background Art

Patent Literature 1 discloses a vehicle having an autonomous driving function.

Citation List

Patent Literature

Patent Literature 1: Japanese Patent Application Laid-Open (JP-A) No. 2022-035198

SUMMARY OF INVENTION

Solution to Problem

According to an embodiment of the present disclosure, an autonomous driving test method is provided. The autonomous driving test method is an autonomous driving test method including setting a plurality of obstacles on a test course; acquiring, by an acquisition unit, information regarding the obstacles; and performing a traveling test related to autonomous driving of an autonomous driving vehicle by using a plurality of pieces of the information acquired by the acquisition unit and AI.

According to an embodiment of the present disclosure, an autonomous driving test method is provided. The autonomous driving test method is an autonomous driving test method including acquiring behavior information indicating a behavior of an autonomous driving vehicle; and performing a traveling test of causing the autonomous driving vehicle to travel on a test course on a virtual space on the basis of data in the virtual space corresponding to a test course in which a plurality of obstacles are installed and the behavior information.

According to an embodiment of the present disclosure, there is provided a program for causing a computer to execute the autonomous driving test method.

The above summary of the disclosure does not enumerate all the necessary features of the present disclosure. A subcombination of these feature groups may also be disclosed.

BRIEF DESCRIPTION OF DRAWINGS

Fig. 1 schematically shows an example of a test course according to the present embodiment.
Fig. 2 schematically shows an example of a functional configuration of an autonomous driving vehicle 10.
Fig. 3 schematically shows an example of a processing routine executed by an information processing device.
Fig. 4 is a diagram for describing control used in a traveling test course for autonomous driving.
Fig. 5 is a diagram for describing control used in a traveling test course for autonomous driving.
Fig. 6 is a diagram for describing control used in a traveling test course for autonomous driving.
Fig. 7 schematically shows an example of a hardware configuration of a computer 1200 that functions as the information processing device.
Fig. 8 schematically shows another example of a processing routine executed by the information processing device.
Fig. 9 is a block diagram schematically showing an example of a server according to a modification example.
Fig. 10 is a flowchart schematically showing an example of an autonomous driving test method according to a modification example.

DESCRIPTION OF EMBODIMENTS

Hereinafter, the present disclosure will be described through embodiments of the disclosure, but the following embodiments do not limit the disclosure according to the claims. Not all combinations of features described in the embodiments are essential to the disclosed solutions.

A conventional traveling test course is not made for autonomous driving, and is insufficient for a traveling test of an autonomous driving vehicle.

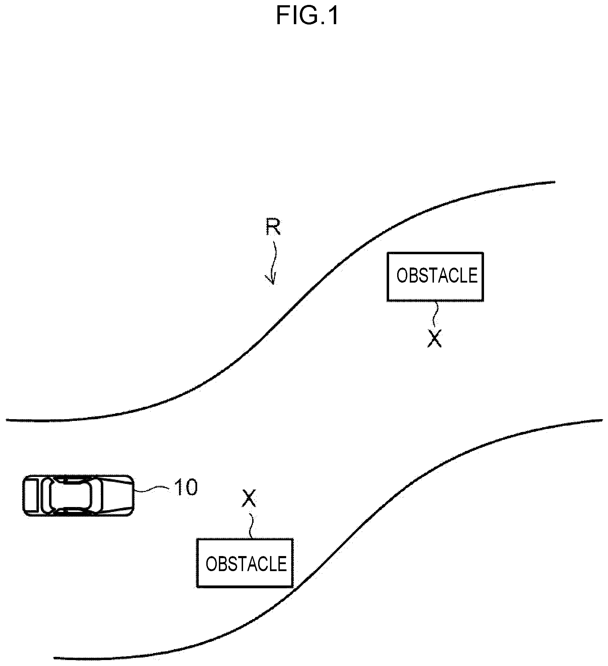

Therefore, in the embodiment, as shown in Fig. 1, various obstacles X are installed on a test course R, and the autonomous driving vehicle 10 that performs test traveling travels on the test course R. As a result, it is possible to test whether the autonomous driving system can be designed without problems, and it is possible to perform an autonomous driving vehicle test with higher accuracy.

Examples of obstacles installed on the test course R may include rain, snow, a typhoon, smoke, a fog, truck tires, a drone, soccer, baseball, golf, a balloon, a red light, a robot, a two-wheeled vehicle, an oncoming vehicle, dazzling light, a situation where headlights cannot be used in the dark and a flashlight is used, a color cone (registered trademark) or a sign, an ambulance, a fire engine, a bicycle, an aged robot, a narrow road, a dog robot, a mountain road, a sandy road, a muddy road, a bumpy road, a fallen tree obstruction, a pit hole, a puddle, a caltrop, and a rail which is running close to a vehicle track (in a case in which a track of the vehicle is set as an obstacle, and the autonomous driving vehicle 10 is traveling on a rail, the width of one rail is smaller than the tire width of the vehicle). The plurality of obstacles are disposed on the test course R.

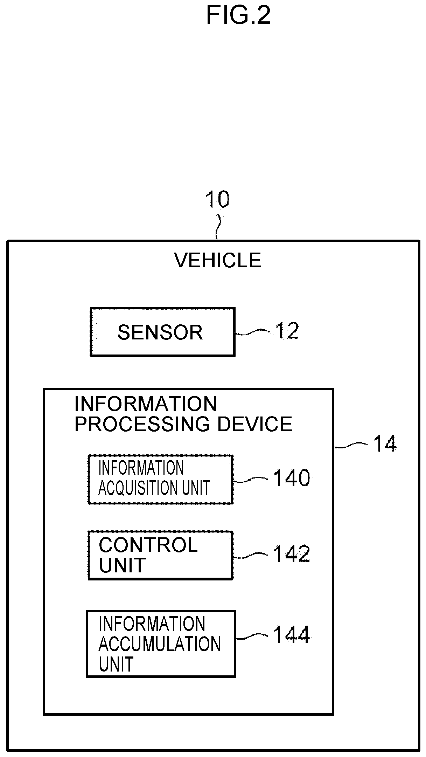

Fig. 2 is a schematic diagram showing an example of the autonomous driving vehicle 10 according to the embodiment. The autonomous driving vehicle 10 includes a sensor 12 mounted on the autonomous driving vehicle 10 and an information processing device 14.

The sensor 12 sequentially acquires obstacle information indicating obstacles around the autonomous driving vehicle 10. As the sensor 12, a highest-performance camera, a solid-state LiDAR, a multi-color laser coaxial displacement meter, or various other sensor groups can be adopted. Examples of the sensor 12 include a vibration meter, a thermo-camera, a hardness meter, a radar, a LiDAR, a high-pixel/telephoto/ultra-wide angle/360 degrees/high-performance camera, and sensors using vision recognition, microphonics, ultrasonic waves, vibration, infrared rays, ultraviolet rays, electromagnetic waves, temperature, humidity, spot AI weather forecasts, high-accuracy multi-channel GPS, low-altitude satellite information, and long tail incident AI data. The long tail incident AI data may be trip data of the autonomous driving vehicle mounted at level 5.

In addition to the obstacle information, the sensor 12 detects an image, a distance, vibration, heat, odors, colors, sound, ultrasonic waves, ultraviolet rays, infrared rays, or the like. Examples of information detected by the sensor 12 include movement of the center of gravity of the weight, a material of a road, the outside air temperature, the outside air humidity, vertical and lateral inclination angle of a slope, freezing of a road, a moisture amount, a material of each tire, a wear situation, an air pressure, a road width, the presence or absence of passing prohibition, the vehicle type information of an oncoming vehicle and front and rear vehicles, cruising states of these vehicles, and surrounding situations (birds, animals, soccer balls, accident vehicles, earthquakes, housing construction, winds, typhoons, heavy rain, light rain, snowstorm, fog, and the like).

The sensor 12 performs these detections every nanosecond.

The information processing device 14 includes an information acquisition unit 140, a control unit 142, and an information accumulation unit 144 as functional configurations.

The information acquisition unit 140 acquires information regarding the obstacle X detected by the sensor 12. For example, the information acquisition unit 140 may acquire position information of each of the plurality of obstacles X installed on the test course R. In this case, a communication device and a GPS device may be mounted on each obstacle X, and position information of the obstacle X measured by the GPS device may be transmitted to the information processing device 14 by the communication device. In a case in which the obstacle X is a moving object, position information of the obstacle X is transmitted to the information processing device 14, so that time-series data of the position information of the obstacle X can be acquired.

The control unit 142 performs a traveling test related to autonomous driving by using a plurality of pieces of information acquired by the information acquisition unit 140 and an artificial intelligence (AI).

For example, the control unit 142 executes the following processing.

(1) 3D mapping of the entire test course
(2) Preparing a strategy to reach the finish of the test course in the fastest time possible
(3) Planning a speed at which a vehicle body should travel on the test course and right and left steering angles in units of nanoseconds
(4) Transmitting the rotational speed to the four-wheel motors of the four wheels and left and right steering shafts in units of nanoseconds (5) Correcting a deviation in a case in which a deviation occurs due to a slip coefficient between an obstacle and a tire.

For example, the control unit 142 controls left and right rotation of the autonomous driving vehicle 10 in units of nanoseconds, calculates a direction in which the autonomous driving vehicle 10 advances and an optimum speed for every nanosecond, and gives an instruction to the steering shafts of the autonomous driving vehicle 10. Such vehicle control is referred to as perfect steering. In a case in which the autonomous driving vehicle 10 is a vehicle equipped with a steer-by-wire technique, there is no steering shaft, and thus an electrical signal is directly transmitted to the control unit that controls a tire angle.

The control unit 142 stores, in the information accumulation unit 144, information indicating a behavior of the autonomous driving vehicle 10 in a case in which the traveling test related to autonomous driving is performed. As a result, the information accumulation unit 144 stores information in a case in which the autonomous driving vehicle 10 travels on the test course R.

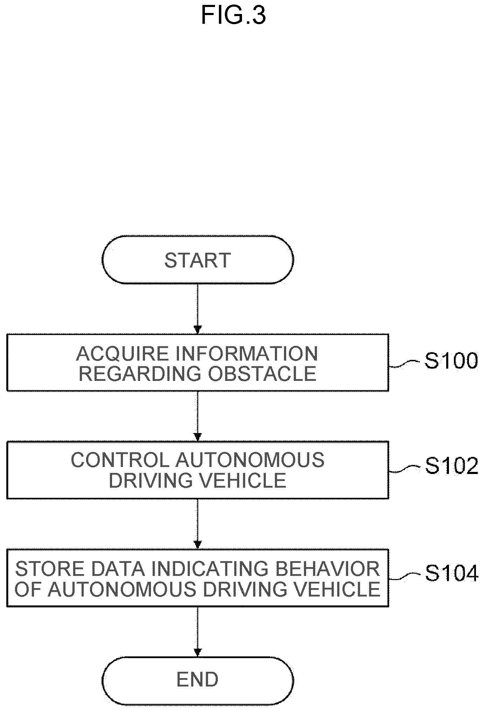

The information processing device 14 repeatedly executes the flowchart shown in Fig. 3.

In step S100, the information acquisition unit 140 acquires information regarding the obstacle detected by the sensor 12.

In step S102, the control unit 142 controls the autonomous driving vehicle 10 by using the plurality of pieces of information acquired in step S100 and the AI, thereby performing a traveling test related to autonomous driving.

In step S104, the control unit 142 stores information indicating the behavior of the autonomous driving vehicle 10 in the information accumulation unit 144.

According to the embodiment, a test course for autonomous driving in which all obstacles are set is designed. In the embodiment, in a case in which the autonomous driving vehicle travels on the test course, the rotation to the left and right by the perfect steering is controlled in units of nanoseconds, and a direction in which the vehicle should advance and an optimum speed are calculated every nanosecond, and an instruction is given to the steering shafts. The performance of the autonomous driving can be verified by causing the autonomous driving vehicle to travel on such a test course. In a case in which the autonomous driving vehicle is caused to travel on the test course, safer autonomous driving is realized through the control in units of nanoseconds by the perfect steering.

A conventional test course is not designed for autonomous driving using AI on the assumption that a human drives, and the AI is also assumed to travel on a real course. In this respect, in autonomous driving, a vehicle may stumble on an obstacle that a human can easily get over, and the conventional test course is insufficient to verify that autonomous driving using AI has no problem. In the test course for autonomous driving, finer control using AI is required.

In view of such a problem of the related art, according to the embodiment, it is possible to accurately verify the performance of autonomous driving by designing a test course in which all kinds of obstacles are disposed.

As an example of a method of controlling the autonomous driving vehicle 10 by using AI, it may be possible to infer an index value related to control of the autonomous driving vehicle 10 from a plurality of pieces of information acquired by the information acquisition unit 140 by using machine learning, more specifically, deep learning.

The control unit 142 can obtain an accurate index value by performing multivariate analysis (see, for example, Formula (2)) based on an integration method as shown in the following Formula (1) by using the calculation power of Level 6 on data for every nanosecond collected by many sensor groups and the like in the information acquisition unit 140. More specifically, while obtaining an integral value of delta values of various ultra-high resolutions with the calculation power of Level 6, an index value of each variable is obtained at an edge level and in real time, and a result occurring in the next nanosecond can be obtained as the highest probability theoretical value.

[Math. 1]

$$V_n = DL(f(A, B, C, D, \ldots, N)(dA_n/dt)) \qquad (2)$$

DL in the above Formula (2) represents deep learning, and A, B, C, D,..., and N represent an air resistance, a road resistance, road elements (for example, dirt), slip coefficients, and the like.

The index value of each variable may be further refined by increasing the number of times of deep learning. For example, a more accurate index value can be calculated by using a huge amount of data such as a tire, rotation of a motor, a steering angle, a material of a road, weather, dust, an influence at the time of secondary curved deceleration, slip, steering, and a speed control method.

The control unit 142 may execute autonomous driving control for the autonomous driving vehicle 10 on the basis of the plurality of specified index values. Specifically, it is possible to acquire the highest probability theoretical value of a result occurring in the next nanosecond from the plurality of index values and to perform the driving control of the vehicle in consideration of the probability theoretical value.

According to the autonomous driving vehicle 10 including the control unit 142, since analysis and inference of information can be performed by using the calculation power of the Level 6 that is extremely larger than the calculation power of the Level 5, it is possible to perform detailed analysis at a level that is not comparable with the related art. This enables vehicle control for safe autonomous driving.

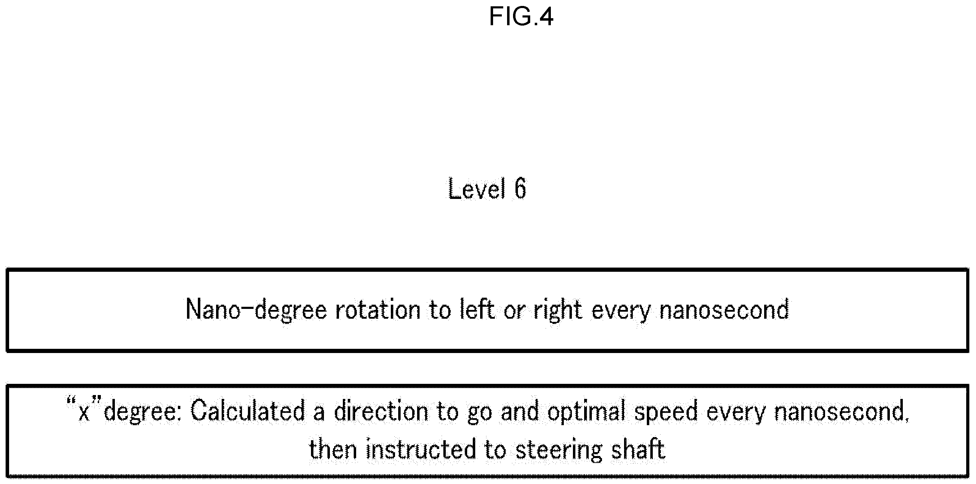

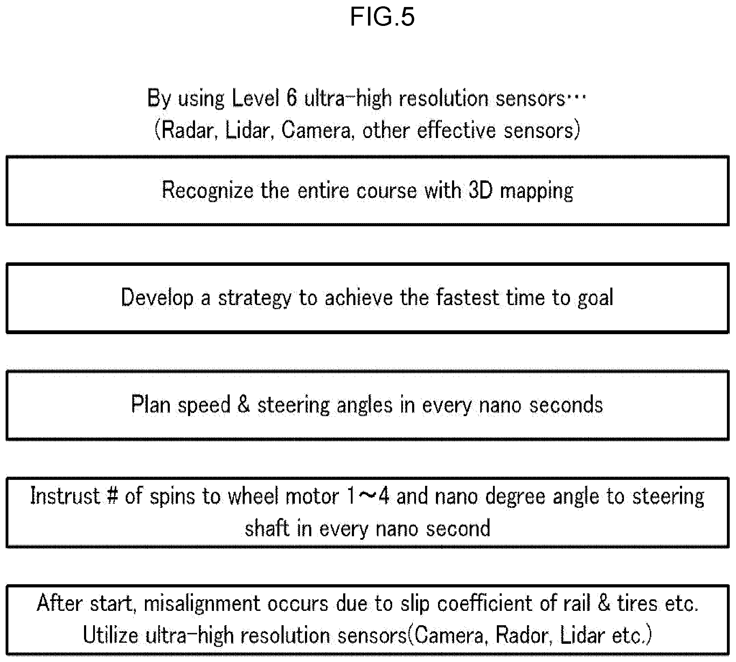

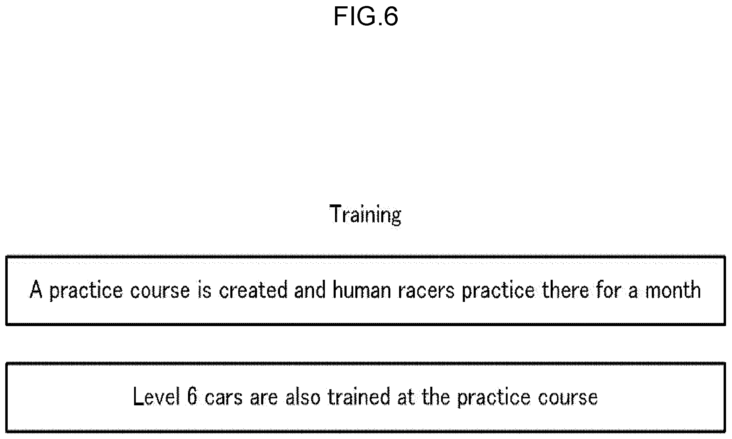

Figs. 4 to 6 are schematic diagrams of the above contents. "Level 6" described in Fig. 4 is a level representing autonomous driving and corresponds to a level higher than Level 5 representing fully autonomous driving. Level 5 represents fully autonomous driving, but is at the same level as driving by a person, and there is still a probability that an accident or the like will occur. Level 6 represents a level higher than Level 5, and corresponds to a level at which a probability of the occurrence of an accident is lower than Level 5. In the embodiment, Level 6 is realized by control at a nanosecond level.

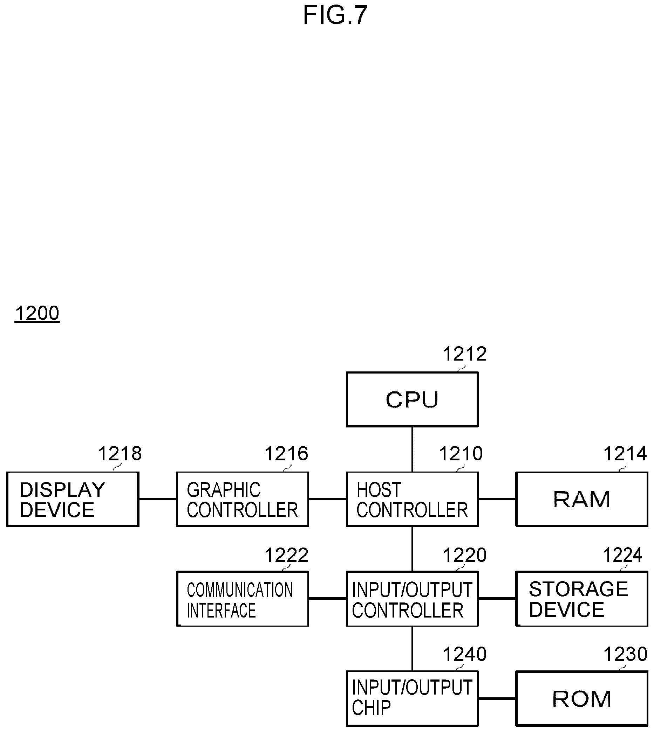

Fig. 7 schematically shows an example of a hardware configuration of a computer 1200 that functions as the information processing device 14. A program installed in the computer 1200 can cause the computer 1200 to function as one or more "units" of the device according to the embodiment, or cause the computer 1200 to execute an operation associated with the device according to the embodiment or one or more "units" thereof, and/or cause the computer 1200 to execute a process according to the embodiment or a stage of the process. Such a program may be executed by a CPU 1212 to cause the computer 1200 to execute specific operations associated with some or all of the blocks in the flowcharts and the block diagrams described in the present specification.

The computer 1200 according to the embodiment includes the CPU 1212, a RAM 1214, and a graphic controller 1216, which are mutually connected via a host controller 1210. The computer 1200 also includes input/output units such as a communication interface 1222, a storage device 1224, a DVD drive, and an IC card drive, which are connected to the host controller 1210 via the input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates according to programs stored in the ROM 1230 and the RAM 1214, thereby controlling each unit. The graphic controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads a program and data from an IC card and/or writes the program and the data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer readable storage medium such as a DVD-ROM or an IC card. The program is read from a computer readable storage medium, installed in the storage device 1224, the RAM 1214, or the ROM 1230, which is also an example of a computer readable storage medium, and executed by the CPU 1212. The information processing described in such a program is read by the computer 1200 and provides cooperation between the program and the various types of hardware resources. A device or a method may be configured by implementing operation or processing of information according to use of the computer 1200.

For example, in a case in which communication is executed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on the recording medium.

The CPU 1212 may cause the RAM 1214 to read the whole or a necessary portion of a file or a database stored in an external recording medium such as the storage device 1224, a DVD drive (DVD-ROM), or an IC card, and may execute various types of processing on data in the RAM 1214. Next, the CPU 1212 may write back the processed data to the external recording medium.

Various types of information such as various types of programs, data, tables, and databases may be stored in a recording medium and subjected to information processing. The CPU 1212 may execute, on the data read from the RAM 1214, various types of processing including various types of operations, information processing, condition determination, conditional branching, unconditional branching, information retrieval/replacement, and the like, which are described throughout the present disclosure and designated by a command sequence of a program, and writes back results thereof to the RAM 1214. The CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches a designated condition from the plurality of entries, read the attribute value of the second attribute stored in the entry, and thus acquire the attribute value of the second attribute associated with the first attribute satisfying a predetermined condition.

The program or software module described above may be stored in a computer readable storage medium on the computer 1200 or in the vicinity of the computer 1200. A recording medium such as a hard disk or a RAM provided in a server system connected to a dedicated communication network or the Internet can be used as a computer readable storage medium, thereby providing a program to the computer 1200 via the network.

The blocks in the flowcharts and block diagrams in the embodiment may represent stages of a process in which an operation is executed or "units" of a device having a function of executing the operation. Specific stages and "units" may be implemented by a dedicated circuit, a programmable circuit supplied along with computer readable instructions stored on a computer readable storage medium, and/or a processor supplied along with computer readable instructions stored on a computer readable storage medium. Dedicated circuits may include digital and/or analog hardware circuits, and may include integrated circuits (ICs) and/or discrete circuits. Programmable circuits may include reconfigurable hardware circuits including, for example, AND, OR, XOR, NAND, NOR, and other logical operations, flip-flops, registers, and memory elements, such as field programmable gate arrays (FPGA) and programmable logic arrays (PLA).

Computer readable storage media may include any tangible device capable of storing instructions executed by a suitable device, and, as a result, a computer readable storage medium having instructions stored thereon has a product including instructions that may be executed to create means for executing operations designated in the flowcharts or block diagrams. Examples of the computer readable storage medium may include an electronic storage medium, a magnetic storage medium, an optical storage medium, an electromagnetic storage medium, and a semiconductor storage medium. More specific examples of the computer readable storage medium may include a Floppy (registered trademark) disk, a diskette, a hard disk, a random access memory (RAM), a read-only memory (ROM), an erasable programmable read-only memory (an EPROM or a flash memory), an electrically erasable programmable read-only memory (EEPROM), a static random access memory (SRAM), a compact disc read-only memory (CD-ROM), a digital versatile disk (DVD), a Blu-Ray (registered trademark)disk, a memory stick, and an integrated circuit card.

The computer readable instructions may include either source codes or object codes written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), or JAVA (registered trademark), C++, and conventional procedural programming languages such as the "C" programming language or similar programming languages.

The computer readable instructions may be provided to a processor of a general purpose computer, a special purpose computer, or another programmable data processing device, or a programmable circuit locally or via a local area network (LAN) or a wide area network (WAN) such as the Internet, in order to cause the processor of the general purpose computer, the special purpose computer, or another programmable data processing device or the programmable circuit to execute the computer readable instructions to generate means for executing operations designated in the flowcharts or the block diagrams. Examples of the processor include a computer processor, a processing unit, a microprocessor, a digital signal processor, a controller, and a microcontroller.

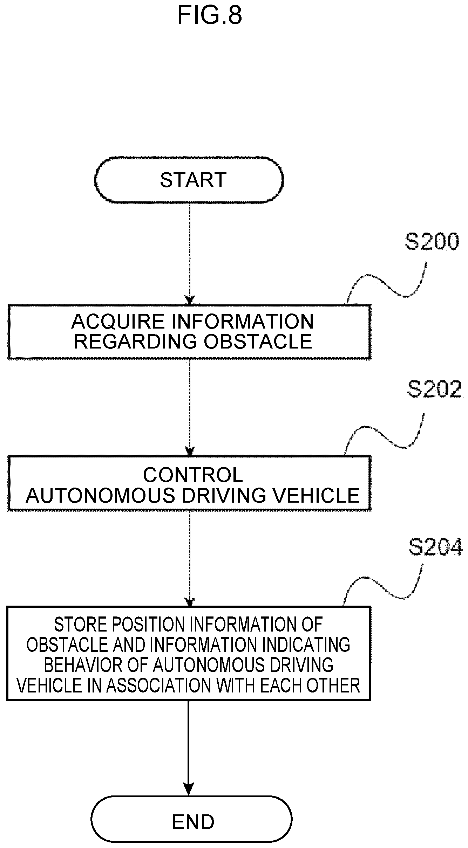

In the above embodiment, an example of the processing routine executed by the information processing device 14 has been shown as Fig. 3, but the present invention is not limited thereto. For example, the processing routine shown in Fig. 8 may be adopted.

Fig. 8 is a flowchart schematically showing another example of the processing routine executed by the information processing device 14. As shown in Fig. 8, in step S200, the information processing device 14 acquires information regarding the obstacle X detected by the sensor 12. The information regarding the obstacle X is information such as position information for each time of the obstacle X and ID information indicating the type and identification number of the obstacle X.

For example, the information processing device 14 may acquire the information regarding the obstacle X accumulated in the information accumulation unit 144 according to the function of the information acquisition unit 140. In a case in which the information regarding the obstacle X is accumulated in a server or the like installed outside the autonomous driving vehicle 10, the information processing device 14 may acquire the information regarding the obstacle X from the external server according to the function of the information acquisition unit 140.

In step S202, the information processing device 14 controls the autonomous driving vehicle 10. Specifically, the information processing device 14 controls the autonomous driving vehicle 10 according to the function of the control unit 142 by using the plurality of pieces of information acquired in step S200 and the AI, thereby performing a traveling test related to autonomous driving.

In step S204, the information processing device 14 stores the information in the information accumulation unit 144. Specifically, the information processing device 14 stores the position information of the obstacle X and the information indicating the behavior of the autonomous driving vehicle 10 in the information accumulation unit 144 in association with each other according to the function of the control unit 142. The position information of the obstacle X is information acquired by the information acquisition unit 140 in step S200. The information indicating the behavior of the autonomous driving vehicle 10 is information in a case in which the control unit 142 controls the autonomous driving vehicle 10 in step S202.

As described above, in step S204, the position information of the obstacle X that changes for each time and the information indicating the behavior of the autonomous driving vehicle 10 that has approached the obstacle X are stored in the information accumulation unit 144 in association with each other. Thus, the behavior of the autonomous driving vehicle 10 with respect to the moving obstacle X can be analyzed by inquiring about the information stored in the information accumulation unit 144.

(Modification Examples)

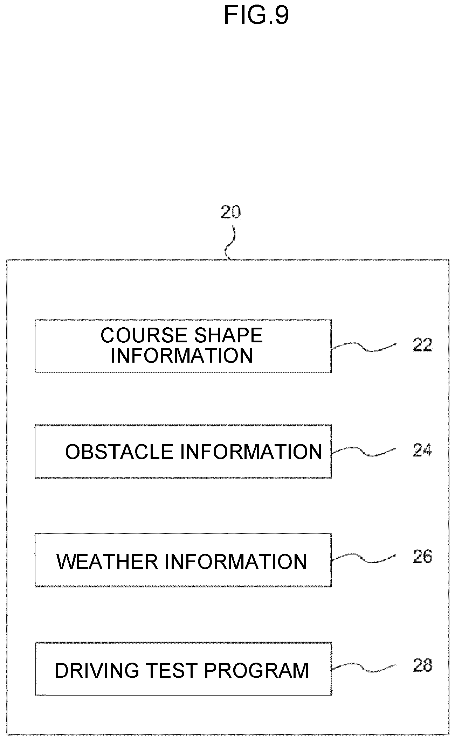

Fig. 9 is a block diagram schematically showing an example of a server 20 according to a modification example. As shown in Fig. 9, the server 20 of the present modification example includes course shape information 22, obstacle information 24, weather information 26, and a driving test program 28.

The course shape information 22 includes a shape of the test course R, road surface information, and the like. For example, the course shape information 22 may be information acquired by a vehicle equipped with a sensor capable of acquiring three-dimensional information traveling in the test course R. The road surface information may include a friction coefficient calculated from a material of the test course R or the like.

The obstacle information 24 is information regarding a plurality of obstacles X installed on the test course R. The obstacle information 24 includes information including the type, a size, a position, a behavior, and the like of the obstacle X.

The weather information 26 is information regarding the weather of the test course R.

The driving test program 28 stores a program for causing the autonomous driving vehicle 10 to travel on a test course on a virtual space.

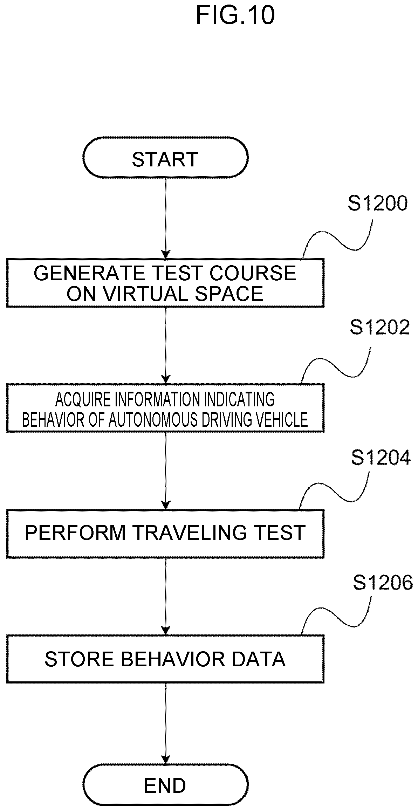

Fig. 10 is a flowchart schematically showing an example of an autonomous driving test method according to a modification example. For example, the information processing device 14 executes the driving test program 28 stored in the server 20 to execute the flowchart of Fig. 10.

In step S1200, the information processing device 140 generates a test course on a virtual space. Specifically, the test course is generated on the virtual space on the basis of the course shape information 22, the obstacle information 24, and the weather information 26. Since the generated test course corresponds to the actual test course R, a behavior of the autonomous driving vehicle 10 can be checked by performing a simulation of causing the autonomous driving vehicle 10 to travel on the test course on the virtual space without causing the autonomous driving vehicle 10 to travel on the test course R.

A position and a behavior of each of the plurality of obstacles can be changed through setting. Any weather can be set from the information stored in the weather information 26. By changing the weather information, a road surface condition, a field of view, and the like in the test course on the virtual space are changed.

In step S1202, the information processing device 140 acquires information indicating the behavior of the autonomous driving vehicle 10. In a case in which the driving test of the autonomous driving vehicle 10 is performed in the actual test course R, the information accumulated in the information accumulation unit 144 may be acquired. Even in a case in which the driving test of the autonomous driving vehicle 10 is not performed in the actual test course R, information indicating a behavior at the time of designing the autonomous driving vehicle 10 may be stored in a predetermined server or the like to be acquired as the information indicating the behavior.

In step S 1204, the information processing device 140 executes a simulation of causing the autonomous driving vehicle to travel on the test course on the virtual space on the basis of the data in the virtual space generated in step S1200 and the information acquired in step S1202. As a result, a traveling test of the autonomous driving vehicle 10 is performed.

In step S1206, information indicating a behavior of the autonomous driving vehicle 10 at the time of the traveling test is accumulated in a predetermined accumulation unit. For example, these pieces of information may be accumulated in the information accumulation unit 144. The information accumulated in the information accumulation unit 144 may be accumulated as different information for each traveling test. The information regarding the test course and the information indicating the behavior may be accumulated in association with each other.

In the modification example, by performing the traveling test in the test course on the virtual space, even in a case in which a physical distance between a development base of the autonomous driving vehicle 10 and the test course R is long, the driving test can be performed without transporting the autonomous driving vehicle 10 to the test course R.

Since the traveling test is not performed by using the actual autonomous driving vehicle 10, a fuel or electric power for traveling the autonomous driving vehicle 10 is not required. Even in a state before assembling the autonomous driving vehicle 10, the driving test can be performed by setting the information indicating the behavior, and a development construction period can be shortened.

Although the present disclosure has been described with reference to the embodiments, the technical scope of the present disclosure is not limited to the scope described in the embodiments. It is apparent to those skilled in the art that various modifications or improvements can be made to the above embodiments. It is apparent from the description of the claims that an aspect to which such modifications or improvements are added can also be included in the technical scope of the present disclosure.

It should be noted that the order of execution of each piece of processing of operations, procedures, steps, stages, and the like in the devices, the systems, the programs, and the methods shown in the claims, the specification, and

## EP 4 603 357 A1

the drawings can be realized in any order unless "before", "prior to", or the like is explicitly stated, and unless the output of the previous processing is used in the later processing. Even if the operation flow in the claims, the specification, and the drawings is described using "first,", "next,", and the like for convenience, this does not mean that it is essential to perform in this order.

The disclosure of Japanese Patent Application No. 2022-164371 filed on October 12, 2022, the disclosure of Japanese Patent Application No. 2022-176624 filed on November 2, 2022, and the disclosure of Japanese Patent Application No. 2022-176625 filed on November 2, 2022 are incorporated herein by reference in their entirety.

Reference Signs List

| 10   | Autonomous driving vehicle    |
|------|-------------------------------|
| 12   | Sensor                        |
| 14   | Information processing device |
| 1200 | Computer                      |
| 1210 | Host controller               |
| 1212 | CPU                           |
| 1214 | RAM                           |
| 1216 | Graphic controller            |
| 1218 | Display device                |
| 1220 | Input/output controller       |
| 1222 | Communication interface       |
| 1224 | Storage device                |
| 1230 | ROM                           |
| 1240 | Input/output chip             |

## Claims

1. An autonomous driving test method comprising:

   setting a plurality of obstacles on a test course; and
   performing a traveling test related to autonomous driving of an autonomous driving vehicle by using an information acquisition unit acquiring information regarding the obstacles, a plurality of pieces of the information acquired by the information acquisition unit, and AI.

2. The autonomous driving test method according to claim 1, further comprising acquiring information indicating a behavior of the autonomous driving vehicle in a case in which the autonomous driving vehicle is caused to travel on the test course through autonomous driving.

3. The autonomous driving test method according to claim 2, wherein

   the information acquisition unit acquires information including position information of the obstacles, and
   the position information of the obstacles and the information indicating the behavior of the autonomous driving vehicle are stored in association with each other.

4. A program for causing a computer to execute processing of:

   acquiring information regarding a plurality of obstacles set on a test course; and
   performing a traveling test related to autonomous driving of a vehicle by using a plurality of pieces of the acquired information and AI.

5. A program for causing a computer to execute the autonomous driving test method according to claim 1.

6. An autonomous driving test method comprising:

   acquiring information indicating a behavior of an autonomous driving vehicle; and
   performing a traveling test of causing the autonomous driving vehicle to travel on a test course on a virtual space on the basis of data in the virtual space corresponding to a test course in which a plurality of obstacles are installed and the information.

7. The autonomous driving test method according to claim 6, wherein information indicating the behavior of the autonomous driving vehicle at the time of the traveling test is stored.

8. The autonomous driving test method according to claim 7, wherein the obstacles and the information indicating the behavior of the autonomous driving vehicle are stored in association with each other.

9. A program for causing a computer to execute processing of:

acquiring information indicating a behavior of an autonomous driving vehicle; and
performing a traveling test of causing the autonomous driving vehicle to travel on a test course on a virtual space on the basis of data in the virtual space corresponding to a test course in which a plurality of obstacles are installed and the information.

FIG.1

FIG.2

# FIG.3

```
          ┌─────────────┐
          │    START    │
          └─────────────┘
                 │
                 ▼
   ┌──────────────────────────────┐
   │    ACQUIRE INFORMATION       │──── S100
   │    REGARDING OBSTACLE        │
   └──────────────────────────────┘
                 │
                 ▼
   ┌──────────────────────────────┐
   │    CONTROL AUTONOMOUS         │──── S102
   │    DRIVING VEHICLE            │
   └──────────────────────────────┘
                 │
                 ▼
   ┌──────────────────────────────────────┐
   │  STORE DATA INDICATING BEHAVIOR      │──── S104
   │  OF AUTONOMOUS DRIVING VEHICLE       │
   └──────────────────────────────────────┘
                 │
                 ▼
          ┌─────────────┐
          │     END     │
          └─────────────┘
```

## FIG.4

### Level 6

| |
|---|
| Nano-degree rotation to left or right every nanosecond |

| |
|---|
| "x" degree: Calculated a direction to go and optimal speed every nanosecond, then instructed to steering shaft |

EP 4 603 357 A1

# FIG.5

By using Level 6 ultra-high resolution sensors···
(Radar, Lidar, Camera, other effective sensors)

Recognize the entire course with 3D mapping

Develop a strategy to achieve the fastest time to goal

Plan speed & steering angles in every nano seconds

Instrust # of spins to wheel motor 1~4 and nano degree angle to steering shaft in every nano second

After start, misalignment occurs due to slip coefficient of rail & tires etc. Utilize ultra-high resolution sensors(Camera, Rador, Lidar etc.)

# FIG.6

Training

| A practice course is created and human racers practice there for a month |
| --- |

| Level 6 cars are also trained at the practice course |
| --- |

EP 4 603 357 A1

# FIG.7

1200

CPU — 1212

DISPLAY DEVICE — 1218

GRAPHIC CONTROLLER — 1216

HOST CONTROLLER — 1210

RAM — 1214

COMMUNICATION INTERFACE — 1222

INPUT/OUTPUT CONTROLLER — 1220

STORAGE DEVICE — 1224

INPUT/OUTPUT CHIP — 1240

ROM — 1230

# FIG.8

START

ACQUIRE INFORMATION
REGARDING OBSTACLE

S200

CONTROL
AUTONOMOUS DRIVING VEHICLE

S202

STORE POSITION INFORMATION OF
OBSTACLE AND INFORMATION INDICATING
BEHAVIOR OF AUTONOMOUS DRIVING
VEHICLE IN ASSOCIATION WITH EACH OTHER

S204

END

# FIG.9

20

| COURSE SHAPE INFORMATION | 22 |

| OBSTACLE INFORMATION | 24 |

| WEATHER INFORMATION | 26 |

| DRIVING TEST PROGRAM | 28 |

## FIG.10

```
        START
          │
          │                    S1200
          ▼
┌─────────────────────────┐
│  GENERATE TEST COURSE   │
│    ON VIRTUAL SPACE     │
└─────────────────────────┘
          │                    S1202
          ▼
┌─────────────────────────────────────┐
│    ACQUIRE INFORMATION INDICATING    │
│ BEHAVIOR OF AUTONOMOUS DRIVING VEHICLE│
└─────────────────────────────────────┘
          │                    S1204
          ▼
┌─────────────────────────┐
│  PERFORM TRAVELING TEST │
└─────────────────────────┘
          │                    S1206
          ▼
┌─────────────────────────┐
│   STORE BEHAVIOR DATA   │
└─────────────────────────┘
          │
          ▼
         END
```

## INTERNATIONAL SEARCH REPORT

| International application No. |
| --- |
| **PCT/JP2023/035741** |

**A. CLASSIFICATION OF SUBJECT MATTER**

*B60W 40/02*(2006.01)i; *B60W 40/10*(2012.01)i; *G01M 17/007*(2006.01)i
FI:   G01M17/007 B; B60W40/02; B60W40/10

According to International Patent Classification (IPC) or to both national classification and IPC

**B. FIELDS SEARCHED**

Minimum documentation searched (classification system followed by classification symbols)

B60W40/02; B60W40/10; G01M17/007

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2020-123259 A (HITACHI SOLUTIONS LTD) 13 August 2020 (2020-08-13)<br>paragraphs [0017]-[0022], [0038]-[0074] | 1-9 |
| A | JP 2022-129175 A (NISSAN MOTOR et al.) 05 September 2022 (2022-09-05)<br>paragraphs [0015], [0026], [0038]-[0048] | 1-9 |
| A | CN 111862263 A (GUANGDONG ZHONGKE ZHENHENG INFORMATION<br>TECHNOLOGY CO., LTD.) 30 October 2020 (2020-10-30)<br>paragraph [0020] | 1-9 |
| A | US 2022/0318457 A1 (SHENZHEN ANTU AUTONOMOUS DRIVING TECHNOLOGIES<br>LTD.) 06 October 2022 (2022-10-06)<br>paragraphs [0024]-[0031] | 1-9 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 November 2023** | **14 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/035741**

| Patent document cited in search report | | | Publication date (day/month/year) | Patent family member(s) | | | Publication date (day/month/year) |
|---|---|---|---|---|---|---|---|
| JP | 2020-123259 | A | 13 August 2020 | (Family: none) | | | |
| JP | 2022-129175 | A | 05 September 2022 | (Family: none) | | | |
| CN | 111862263 | A | 30 October 2020 | (Family: none) | | | |
| US | 2022/0318457 | A1 | 06 October 2022 | CN | 112926224 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022035198 A
- JP 2022164371 A
- JP 2022176624 A
- JP 2022176625 A